# EUROPEAN PATENT SPECIFICATION

(11) **EP 0 471 450 B1**
(45) Date of publication and mention of the grant of the patent: **24.05.1995**
(21) Application number: 91306421.8
(22) Date of filing: 16.07.1991
(51) Int. Cl.: B65G 47/244, B65G 17/00

(54) **Mechanical handling system for rotating and dividing a line of packages**
Mechanisches Fördersystem zum Drehen und Aufteilen einer Reihe von Packungen
Système de manutention mécanique pour tourner et distribuer une file d'emballages

(30) Priority: 14.08.1990 GB 9017802
(43) Date of publication of application: 19.02.1992
(73) Proprietor: THE MEAD CORPORATION, Dayton Ohio 45463 (US)
(72) Inventor: Lebras, Philippe, F-36000 Châteauroux (FR)
(74) Representative: Hepworth, John Malcolm

(56) References cited:
- EP-A- 0 124 846
- EP-A- 0 266 644
- GB-A- 2 161 779
- GB-A- 2 185 954
- US-A- 2 779 453

## Description

This invention relates to a mechanical handling system for transporting a line of substantially uniformly sized packages in which the packages are rotated about a vertical axis and formed into a plurality of lines at a delivery station of the system.

A known system of this type according to the preamble of claim 1 is described in US-A-2779453 which discloses an apparatus for manipulating articles during wrapping which has individual article engaging members which gradually and progressively rotate an article through an arc of 90° during movement thereof throughout the length of a run.

The system of the invention is capable of handling the packages in a precise and smooth manner in which the mechanical engagement and disengagement of the packages is achieved without sudden acceleration or abrasive contact with the packages.

The invention provides a mechanical handling system for transporting substantially uniformly sized packages from an infeed station to a delivery station which system comprises a platform on which said packages are supported, means to move the packages on the platform from said infeed station to said delivery station, an endless overhead conveyor above said platform, a plurality of like rotation mechanisms each including a positioning member and carried by said conveyor for engagement with a package, and means to rotate each positioning member while engaged with a package whereby the package is turned through a predetermined angle about a vertical axis during movement of the package along the conveyor path wherein the platform has a lower endless conveyor which comprises package support and divider mechanisms each comprising a set of slats which serve as a platform for a package wherein a plurality of the slats are slidably mounted transversely of the conveyor path and means is provided to displace the plurality of slats to one side or the other of the conveyor path after the package has been turned through the predetermined angle so that the position of a package carried by the package support and divider mechanism can be shifted.

According to a feature of the invention, said predetermined angle may be substantially 90°.

According to another feature of the invention said positioning member may be connected to an eccentrically disposed cam follower which engages a cam track configured to effect rotation of said positioning member.

According to yet another feature of the invention said positioning member may comprise an inverted channel section element arranged to be rotated from a position of initial engagement with a package in which the channel is aligned with the conveyor path to a rotated position in which the channel lies transversely of the conveyor path.

According to a still further feature of the invention, each rotation mechanism may comprise a cross member mounted between and coupled to a pair of spaced conveyor drive chains, the opposite ends of said cross member being furnished with guide elements which are located in laterally disposed guide channels, said positioning member being rotatably mounted below said cross member.

According to yet another feature of the invention, said platform may comprise a lower endless conveyor. In constructions where the platform is a conveyor, it may comprise a series of uniformly spaced package support and divider mechanisms separated one from the next by the same distance that separates the positioning members of the upper conveyor so that the package support and divider mechanisms are in registry with said positioning members and wherein said upper conveyor and said lower conveyor are driven in synchronism.

Preferably said displacing means comprises cam means disposed below said lower conveyor.

According to yet another feature of the invention alternate package support and divider mechanisms may be adapted to displace a package to the left and to the right, respectively, of the conveyor path so as to create two lines of packages at said delivery station.

A mechanical handling system in accordance with the present invention will now be described, by way of example only, with reference to the accompanying drawings, in which:-
FIGURE 1 is a schematic plan view of the system; and
FIGURE 2 shows, on an enlarged scale, a cross-sectional view of the system along the line A-A of Figure 1.

Referring to the drawings, the mechanical handling system shown is designed to transport substantially uniformly-sized packages 1 (in this example six-packs of bottles B1, B2 etc packaged in a paperboard carton), of generally rectangular horizontal cross-section from an infeed station 2 at one end, to a delivery station 3 at the other end. During such transportation, the packages 1 are first rotated through 90 degrees about a vertical axis, and then divided into two parallel outfeed lines before reaching the delivery station 3.

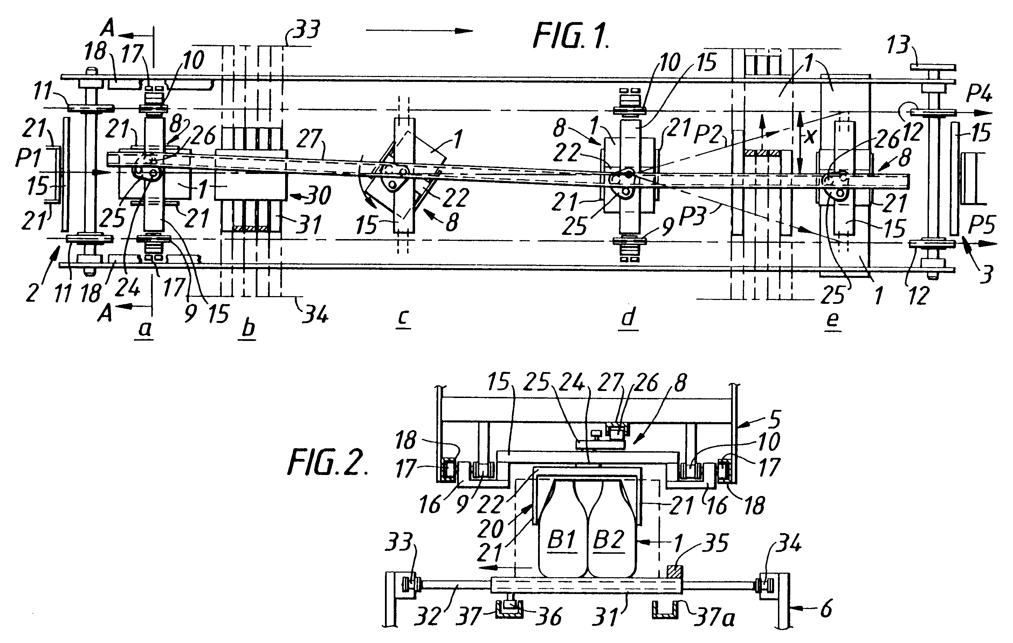

The system comprises an upper endless chain-driven conveyor system 5 disposed directly above a lower endless chain-driven conveyor system 6, and separated therefrom by approximately the height of the packages 1. The upper conveyor system 5 comprises a series of uniformly spaced rotating mechanisms 8 supported between lateral drive chains 9, 10 which pass between sprocket sets 11, 12 at opposite ends of the system, the latter sprocket set 12 being driven via sprocket 13. Note that for illustrative purposes, the upper return run of the upper conveyor system 5 has been omitted, and only the lower run is shown. Furthermore, rather than showing all of the rotation mechanisms 8 on the lower run in their actual positions, Figure 1 shows various stages in the operation of a rotation mechanism 8 during its passage along the conveyor path.

Each rotation mechanism 8 comprises a cross member 15 mounted between and rigidly coupled to the conveyor drive chains 9, 10 by means of end brackets 16 which each carry a guide wheel 17 located in laterally disposed guide channels 18. Mounted centrally below the cross member 15 is a positioning member 20 of inverted channel-section, being formed with side walls 21 depending downwardly from a connecting web 22. The positioning member 20 is mounted for rotation about a vertical axis on a shaft 24 which passes through a bore in the centre of the cross member 15, and by means of which it is rigidly coupled to a crank 25 mounted on the other end of the shaft 24. The crank 25 carries an eccentrically disposed upwardly projecting cam wheel 26 which rides within and is guided by an overhead cam track 27 of inverted channel cross-section, the path of which between positions a and d along the conveyor path has a lateral component sufficient to cause lateral displacement of the cam wheel 26 by an amount corresponding to a 90 degree rotation of the crank 25, and hence of the positioning member 20. The cam track 27 then follows a path which is straight and parallel to the conveyor path between points d and e. A similar cam track arrangement (not shown) is provided along the return path of the conveyor system 5 to rotate the crank 25 and positioning member 20 back through 90 degrees to their original positions at the infeed station 2.

The lower conveyor system 6 comprises a series of uniformly spaced package support/divider mechanisms 30 separated from one another by the same distance that separates the positioning mechanisms of the upper conveyor system 5. The two conveyor systems 5, 6 are driven in synchronism such that, in operation, each support/divider mechanism 30 of the lower conveyor system 6 is aligned directly below a rotation mechanism 8 of the upper conveyor system 5 at least during their travel between points a to e along the conveyor path. Again, it will be apparent that in the schematic drawing of Figure 1, for purposes of illustration only, not all of the rotation mechanisms 8 and the support/divider mechanisms 30 have been shown, and those that have, have not been shown in their actual relative positions as described above.

Each support/divider mechanism 30 comprises a set of unitary slats 31, of which there are five in this embodiment, mounted on respective transverse rods 32 supported between laterally disposed conveyor chains 33, 34. The width of the lower conveyor system 6, i.e. the distance between the conveyor chains 33, 34 is substantially greater than that of the upper conveyor system 5, and correspondingly, the length of the rods 32 is substantially greater than that of the slats 31.

The three innermost slats 31 of each support/divider mechanism 30 are slidably mounted on their respective rods 32 and are each provided at one end on their upper surface with an abutment 35, and towards the other end on their lower surface with a downwardly projecting cam wheel 36. The cam wheel 36 is guided by a cam track 37 of channel cross-section (shown only in Figure 2) the path of which extends substantially the full length of the conveyors 5, 6. This cam track remains straight and parallel to the conveyor path between points a to d, and then diverges outwardly through a lateral distance x between points d and e along the conveyor path, before reverting to a straight and parallel path thereafter.

Note that a second cam track 37a (shown only in Figure 2) identical to the cam track 37 is provided on the opposite side of the central axis of the conveyor system 6. As with cam track 37, cam track 37a follows a straight path parallel to the path of the conveyor system 6 between points a and d, then diverges outwardly in the opposite direction to the divergence of cam track 37 between points d and e before again reverting to a straight path parallel to the conveyor path for the remainder of its length.

Although the individual support/dividing mechanism 30 shown in Figure 2 is arranged with its cam wheels 36 engaging in the cam track 37 on the left hand side (as viewed), and the abutments 35 on the right hand side, it is important to realise that alternate support/divider mechanisms 30 along the conveyor system 6 are oppositely disposed. Thus the rotator mechanisms 30 adjacent to the one shown in Figure 2 will have their cam wheels 36 engaged in the cam track 37a on the right hand side.

In operation of the handling system, packages 1 are fed onto the lower conveyor system 6 at the infeed station with their length aligned with the direction of travel along path P1. One package is loaded onto each of the support/dividing mechanisms 30 and the positioning member 20 of the corresponding rotating mechanism 8 then engages the package 1 as it enters the space between the two conveyor systems 5, 6, with side walls 21 locating against either side wall of the package. As the package is carried from position a (in which position it is also shown in Figure 2) towards position d along the conveyor path, it is rotated anti-clockwise through 90 degrees by the rotating mechanism 8. This is effected gradually by the progressive lateral displacement of the cam wheel 26 by the cam track 27 as it travels from point a to point c, which in turn causes the crank 25 and hence the positioning member to rotate through 90 degrees.

As the packages are carried further along the conveyor path, between points d and e, alternate packages are moved progressively to the left and right, respectively, along diverging paths P2, P3 eventually to form two parallel lines of packages travelling along respective paths P4, P5 at the delivery station 3. This division of the previously 90 degree rotated packages is effected by the progressive lateral displacement of the cam wheels 36 of alternate support/divider mechanisms 30 by the respective left and right hand cam tracks 37, 37a.

This in turn causes the three middle slats 31 of the support/divider mechanisms 30 to slide along their respective rods 32, and the abutments on the upper surfaces of these slats 31 ensure that the packages 1 move across with them. It will be seen that because the positioning members 20 of the rotating mechanisms 8 are at this stage oriented in the direction of the lateral displacement of the packages 1 by the support/divider mechanisms 30, the side walls 21 of the positioning members 20 serve to guide the packages during this movement until they are fully disengaged therefrom as they reach point e along the conveyor path.

It will be appreciated that the invention is capable of being adapted to handle different shapes and sizes of packages and to divide them into more than two lines while retaining the advantages of precise and smooth mechanical engagement and disengagement of the handling mechanisms with the packages avoiding sudden acceleration and bumping associated with conventional systems. For example, the number of slats 31 in each support/divider mechanisms 30 can be varied according to the size and shape of the packages to be handled. The slidable slats 31 in each support/divider mechanism need not be individually provided with cam wheels 36 as described above. Some or all of them may be coupled to a common cam wheel, or any other suitable equivalent, for effecting the lateral displacement thereof, and indeed in some cases it may be desirable to arrange for all of the slats 31 in each mechanism 30 to be displaced by such cam means.

## Claims

1. A mechanical handling system for transporting substantially uniformly sized packages (1) from an infeed station (2) to a delivery station (3) which system comprises a platform on which said packages are supported, means to move the packages on the platform from said infeed station to said delivery station, an endless overhead conveyor (5) above said platform, a plurality of like rotation mechanisms (8) each including a positioning member (20) and carried by said conveyor for engagement with a package, and means (25, 26, 27) to rotate each positioning member while engaged with a package whereby the package is turned through a predetermined angle about a vertical axis during movement of the package along the conveyor path, characterised in that the platform comprises package support and divider mechanisms (30) each comprising a set of slats (31) which serve as a platform for a package (1) wherein a plurality of the slats are slidably mounted transversely of the conveyor path and means (36, 37) is provided to displace the plurality of slats to one side or the other of the conveyor path after the package has been turned through the predetermined angle so that the position of a package carried by the package support and divider mechanisms (30) can be shifted.

2. A system according to claim 1 wherein said predetermined angle is substantially 90°.

3. A system according to claim 1 or claim 2 wherein said positioning member (20) is connected to an eccentrically disposed cam follower (26) which engages a cam track (27) configured to effect rotation of said positioning member (20).

4. A system according to any of the preceding claims wherein said positioning member (20) comprises an inverted channel section element arranged to be rotated from a position (a) of initial engagement with a package in which the channel is aligned with the conveyor path to a rotated position (d) in which the channel lies transversely of the conveyor path.

5. A system according to any of the preceding claims wherein each rotation mechanism (8) comprises a cross member (15) mounted between and coupled to a pair of spaced conveyor drive chains (9, 10), the opposite ends of said cross member being furnished with guide elements (17) which are located in laterally disposed guide channels (18), said positioning member (20) being rotatably mounted below said cross member.

6. A system according to any of the preceding claims wherein the platform comprises a lower endless conveyor (6).

7. A system according to claim 6, wherein said lower conveyor (6) comprises a series of uniformly spaced package support and divider mechanisms (30) separated one from the next by the same distance that separates the positioning members (20) of the upper conveyor (5) so that the package support and divider mechanisms (30) are in registry with said positioning members (20) and wherein said upper conveyor and said lower conveyor are driven in synchronism.

8. A system according to any preceding claim, wherein said displacing means comprises cam means (36, 37) disposed below said lower conveyor.

9. A system according to any preceding claim wherein alternate package support and divider mechanisms (30) are adapted to displace a package to the left and to the right, respectively, of the conveyor path so as to create two lines of packages at said delivery station (3).

## Patentansprüche

1. Mechanisches Handhabungssystem zum Transportieren von Paketen (1) einer im wesentlichen gleichen Größe von einer Zuführstation (2) zu einer Ausgabestation (3), wobei das System eine Plattform, auf der die Pakete getragen werden, Einrichtungen, um die Pakete auf der Plattform von der Zuführstation zu der Ausgabestation zu bewegen, eine endlose, obenliegende Fördereinrichtung (5) oberhalb der Plattform, eine Mehrzahl ähnlicher Drehmechanismen (8), von denen jeder ein Positionierungsteil (20) umfaßt und durch die Fördereinrichtung zum Eingriff mit einem Paket getragen wird, und Einrichtungen (25, 26, 27), um jedes Positionierungsteil zu drehen, während es mit einem Paket in Eingriff gebracht ist, wodurch das Paket um einen vorgegebenen Winkel um eine vertikale Achse während einer Bewegung des Pakets entlang des Förderdurchgangswegs gedreht wird, aufweist, dadurch gekennzeichnet, daß die Plattform Paket-Trage- und Aufteilungsmechanismen (30) aufweist, von denen jeder einen Satz Stäbe (31) aufweist, die als eine Plattform für ein Paket (1) dienen, wobei eine Mehrzahl der Stäbe gleitend quer zu dem Förderdurchgangsweg befestigt ist, und wobei eine Einrichtung (36, 37) vorgesehen ist, um die Mehrzahl der Stäbe zu einer Seite oder der anderen des Förderdurchgangswegs zu verschieben, nachdem das Paket um den vorgegebenen Winkel gedreht worden ist, so daß die Position eines Pakets, das durch die Paket-Trage- und Aufteilungsmechanismen (30) durchgeführt wird, verschoben werden kann.

2. System nach Anspruch 1, wobei der vorgegebene Winkel im wesentlichen 90° beträgt.

3. System nach Anspruch 1 oder Anspruch 2, wobei das Positionierungsteil (20) mit einem exzentrisch angeordneten Nockenfolgeglied (26) verbunden ist, das in eine Nockenspur (27) eingreift, die so konfiguriert ist, um eine Drehung des Positionierungsteils (20) zu bewirken.

4. System nach einem der vorhergehenden Ansprüche, wobei das Positionierungsteil (20) ein Element mit umgekehrtem Kanalquerschnitt aufweist, das so angeordnet ist, um von einer Position (a) eines anfänglichen Eingriffs mit einem Paket, in der der Kanal zu dem Förderdurchgangsweg ausgerichtet ist, zu einer gedrehten Position (d), in der der Kanal quer zu dem Förderdurchgangsweg liegt, gedreht zu werden.

5. System nach einem der vorhergehenden Ansprüche, wobei jeder Drehmechanismus (8) ein Querteil (15) aufweist, das zwischen einem Paar voneinander beabstandeter Förderantriebsketten (9, 10) befestigt und verbunden ist, wobei die entgegengesetzten Enden des Querschnittsteils mit Führungselementen (17) ausgestattet sind, die in seitlich beabstandeten Führungskanälen (18) angeordnet sind, wobei das Positionierungsteil (20) drehbar unterhalb des Querteils befestigt ist.

6. System nach einem der vorhergehenden Ansprüche, wobei die Plattform eine untere, endlose Fördereinrichtung (6) aufweist.

7. System nach Anspruch 6, wobei die Fördereinrichtung (6) eine Reihe von gleichförmig beabstandeten Paket-Trage- und Aufteilungsmechanismen (30) aufweist, die einer vor dem nächsten um denselben Abstand getrennt sind, der die Positionierungsteile (20) der oberen Fördereinrichtung (5) trennt, so daß die Paket-Trage- und Aufteilungsmechanismen (30) in Ausrichtung mit den Positionierungsteilen (20) sind, und wobei die obere Fördereinrichtung und die untere Fördereinrichtung synchron zueinander angetrieben werden.

8. System nach einem der vorhergehenden Ansprüche, wobei die Verschiebungseinrichtung Nockeneinrichtungen (36, 37) aufweist, die unterhalb der unteren Fördereinrichtung angeordnet sind.

9. System nach einem der vorhergehenden Ansprüche, wobei alternierende Paket-Trage- und Aufteilungsmechanismen (30) dazu angepaßt sind, ein Paket jeweils nach links und nach rechts des Förderdurchgangswegs zu verschieben, um so zwei Reihen Pakete an der Ausgabestation (3) zu bilden.

## Revendications

1. Appareil de manutention mécanique pour transporter des emballages (1) ayant sensiblement la même taille d'une station de chargement (2) à une station de distribution (3), cet appareil comprenant une plateforme sur laquelle les emballages sont supportés, des moyens pour déplacer ces emballages se trouvant sur la plateforme depuis la station de chargement jusqu'à la station de distribution, un transporteur sans fin supérieur (5) situé au-dessus de la plateforme, plusieurs mécanismes (8) de pivotement identiques comprenant chacun un élément de positionnement (20) et supportés par ce transporteur supérieur pour emprisonner un emballage, et des moyens (25,26,27) servant à faire pivoter chaque élément de positionnement pendant que celui-ci emprisonne un emballage, ce dernier subissant un pivotement suivant un angle prédéterminé autour d'un axe vertical pendant sa progression le long du parcours du transporteur, cet appareil étant caractérisé par le fait que la plateforme est pourvue de mécanismes (30) de support et de répartition des emballages, constitués chacun par un ensemble de lames (31) servant de plateforme pour un emballage (1), et dans lequel plusieurs de ces lames sont montées de manière à coulisser transversalement au parcours du transporteur, et des moyens (36, 37) sont prévus pour déplacer ces lames coulissantes d'un côté ou de l'autre du parcours du transporteur après que l'emballage ait subi un pivotement suivant l'angle prédéterminé, et de manière que la position d'un emballage porté par le mécanisme (30) de support et de répartition de ces emballages puisse être changée.

2. Appareil selon la revendication 1, caractérisé par le fait que l'angle prédéterminé est sensiblement égal à 90°.

3. Appareil selon l'une ou l'autre des revendications 1 ou 2, caractérisé par le fait que l'élément de positionnement (20) est relié à un galet de came (26) disposé de manière excentrée et engagé dans une voie de came (27) ayant une configuration adaptée pour faire pivoter l'élément de positionnement (20).

4. Appareil selon l'une quelconque des revendications 1 à 3, caractérisé par le fait que l'élément de positionnement (20) est constitué par un élément dont la section forme un canal renversé, adapté pour pouvoir pivoter d'une position (a) d'emprisonnement initial d'un emballage, dans laquelle le canal est axé avec le parcours du transporteur, à une position (b) pivotée, dans laquelle le canal est axé transversalement à ce parcours du transporteur.

5. Appareil selon l'une quelconque des revendications 1 à 4, caractérisé par le fait que chaque mécanisme (8) de pivotement est constitué par un élément transversal (15) monté entre les deux chaînes (9,10) d'entraînement du transporteur, écartées entre elles, lequel élément transversal étant fixé à ces chaînes et ayant ses extrémités opposées pourvues d'éléments de guidage (17) engagés dans des canaux de guidage (18) situés latéralement et l'élément de positionnement (20) étant monté de manière pivotante en dessous de cet élément transversal (15).

6. Appareil selon l'une quelconque des revendications 1 à 5, caractérisé par le fait que la plateforme est constituée par un transporteur sans fin inférieur (6).

7. Appareil selon l'une quelconque des revendications 1 à 6, caractérisé par le fait que le transporteur inférieur (6) comporte une série de mécanismes (30) de support et de répartition des emballages, dans laquelle ces mécanismes sont régulièrement espacés et séparés les uns des autres par une distance égale à celle qui sépare les uns des autres les éléments de positionnement (20) supportés par le transporteur supérieur (5) et de manière à ce que ces mécanismes (30) de support et de répartition des emballages coïncident avec ces éléments de positionnement (20), le transporteur supérieur (5) et le transporteur inférieur (6) étant entraînés de manière synchrone.

8. Appareil selon l'une quelconque des revendications 1 à 7, caractérisé par le fait que les moyens d'entraînement en déplacement sont constitués par des moyens (36, 37) incluant des cames et situés au-dessous du transporteur inférieur.

9. Appareil selon l'une quelconque des revendications 1 à 8, caractérisé par le fait que les mécanismes (30) successifs de support et de répartition des emballages peuvent être adaptés pour déplacer un emballage, alternativement, vers la gauche et vers la droite du parcours du transporteur inférieur (6) de manière à mettre les emballages sur deux files au niveau de la station de distribution (3).
